# EUROPEAN PATENT APPLICATION

(11) **EP 4 614 115 A1**
(43) Date of publication of application: **10.09.2025**
(21) Application number: 25155980.3
(22) Date of filing: 05.02.2025
(51) Int. Cl.: G01F 1/32, G01F 1/74

(54) **APPARATUS, METHOD, AND PROGRAM**

(30) Priority: 06.03.2024 JP 2024033633
(71) Applicant: Yokogawa Electric Corporation, Tokyo 180-8750 (JP)
(72) Inventor: Goto, Moe, Musashino-shi, Tokyo, 180-8750 (JP); Nomura, Ryousuke, Musashino-shi, Tokyo, 180-8750 (JP); Okamoto, Kazutoshi, Musashino-shi, Tokyo, 180-8750 (JP); Ishinabe, Atsushi, Musashino-shi, Tokyo, 180-8750 (JP); Hayashi, Yuichi, Musashino-shi, Tokyo, 180-8750 (JP)
(74) Representative: Hoffmann Eitle

(57) **Abstract**

Provided is an estimation apparatus comprising an acquisition unit that acquires state data including intensity data of at least one frequency band related to a detection signal detected by a vortex flow meter for a fluid, a state determination estimation unit that estimates a state of the fluid based on the state data acquired by the acquisition unit, a fluid quality estimation unit that estimates, from the intensity data, at least either of a liquid amount or dryness related to the fluid according to the state of the fluid estimated by the state determination estimation unit, and an output unit that outputs at least either of the liquid amount or the dryness estimated by the fluid quality estimation unit.

## Description

### BACKGROUND

### 1. TECHNICAL FIELD

The present invention relates to an apparatus, a method, and a program.

### 2. RELATED ART

Patent document 1 describes "a measurement method of wetness for measuring a flow rate of the wet vapor distributed in a pipe with one of a vortex flow meter or an ultrasonic flow meter and an orifice flow meter to acquire wetness in the pipe by using the flow rate measurement value". Patent document 2 describes that "the vortex flow measurement apparatus is capable of measuring, by using a Karman vortex frequency recorded by a vortex flow sensor 200, a flow speed of a first phase of a medium with two or more phases that usually flows during use, and at the same time is capable of quickly (that is, online) detecting generation of at least a second phase in a form of distributed particle flow and/or a droplet flow". Patent document 3 describes that "during use of the vortex flow measurement apparatus, a mass flow rate of a wall flow of the second phase is quantitatively measured with a simple method based on a measurement signal as well as a standard deviation or kurtosis decided from the vortex frequency and also referring to the correlation". Related Art Documents

### Patent documents

Patent Document 1: Japanese Patent Application Publication No. 2013-185915
Patent Document 2: Japanese Patent No. 5443514
Patent Document 3: Japanese Patent No. 5355724

### SUMMARY

In a first aspect of the present invention, provided is an estimation apparatus comprising an acquisition unit that acquires state data including intensity data of at least one frequency band related to a detection signal detected by a vortex flow meter for a fluid, a state determination estimation unit that estimates a state of the fluid based on the state data acquired by the acquisition unit, a fluid quality estimation unit that estimates, from the intensity data, at least either of a liquid amount or dryness related to the fluid according to the state of the fluid estimated by the state determination estimation unit, and an output unit that outputs at least either of the liquid amount or the dryness estimated by the fluid quality estimation unit.

In the above-described estimation apparatus, the acquisition unit may acquire a digital signal representing the intensity data of at least one frequency band from the vortex flow meter.

In the any of the above-described estimation apparatuses, the acquisition unit may acquire the state data including at least one of a flow speed, a temperature, a viscosity, a pressure, concentration, or density measured for the fluid, and the fluid quality estimation unit may estimate, from the intensity data acquired by the acquisition unit, and the state data including at least one of the flow speed, the temperature, the pressure, the viscosity, the concentration, or the density measured for the fluid, at least either of the liquid amount or dryness related to the fluid, according to a state of the fluid estimated by the state determination estimation unit.

In the above-described estimation apparatus, the vortex flow meter may output, to a computing apparatus, a pulse signal representing a vortex frequency of the detection signal generated based on the intensity data of at least one frequency band, and the acquisition unit may acquires the state data including at least one of the pressure, the flow speed, a volumetric flow rate, the density, or a mass flow rate of the fluid calculated based on the pulse signal by the computing apparatus.

In any of the above-described estimation apparatuses, the acquisition unit may acquire the state data including intensity data of a plurality of frequency bands related to a detection signal of the fluid detected by the vortex flow meter, and the fluid quality estimation unit may estimate at least either of the liquid amount or dryness related to the fluid from the intensity data of the plurality of frequency bands.

In the above-described estimation apparatus, the fluid quality estimation unit may estimate, from a maximum value among the intensity data of the plurality of frequency bands or a combined value of intensity data of the plurality of frequency bands, at least either of the liquid amount or dryness related to the fluid. The fluid quality estimation unit may estimation at least either of the liquid amount or dryness related to the fluid from a sum value or an average value of intensity data of all or a part of the plurality of pieces of intensity data.

In any of the above-described estimation apparatuses, the acquisition unit may acquire the intensity data that is normalized, and the fluid quality estimation unit may estimate, from the intensity data that is normalized, at least either of the liquid amount or dryness related to the fluid. The acquisition unit may normalize the intensity data based on reference intensity data, and acquire the normalized intensity data. The acquisition unit may calculate a difference or a ratio of the acquired intensity data and the reference intensity data, and acquire the calculated value as the normalized intensity data.

In any of the above-described estimation apparatuses, the estimation apparatus further comprises a selection unit that selects, from a plurality of computations, a computation corresponding to the state of the fluid estimated by the state determination estimation unit, wherein the fluid quality estimation unit may estimate, from the intensity data acquired by acquisition unit, at least either of the liquid amount or dryness related to the fluid through the computation selected by the selection unit.

In any of the above-described estimation apparatuses, the state determination estimation unit may estimate, based on the state data acquired by acquisition unit, which of a stratified flow, a stratified wavy flow, or a annular mist flow the state of the fluid is.

In the above-described estimation apparatus, the state determination estimation unit may determine whether the state of the fluid is wet vapor based on the state data acquired by the acquisition unit, and estimate which of a stratified flow, a stratified wavy flow, or an annular mist flow the state of the fluid is based on the state data acquired by the acquisition unit, when the state of the fluid is determined to be wet vapor. The state determination estimation unit may determine whether the state of the fluid is superheated vapor based on the state data of the fluid acquired by the acquisition unit, and determine whether the state of the fluid is wet vapor when the state of the fluid is not superheated vapor.

In any of the above-described estimation apparatuses, the state determination estimation unit may estimate, based on the state data acquired by the acquisition unit, the state of the fluid by using a first model for estimating the state of the fluid from the state data.

In the above-described estimation apparatus, the selection unit may select, from a plurality of second models for estimating, from intensity data of at least one frequency band related to a detection signal of the fluid, at least either of a liquid amount or dryness related to the fluid, a second model corresponding to the state of the fluid estimated by the state determination estimation unit according to the state of the fluid, and the fluid quality estimation unit may estimate, from the intensity data, at least either of the liquid amount or dryness related to the fluid by using the second model selected by the selection unit.

In the above-described estimation apparatus, the estimation apparatus may further comprise a learning processing unit that generates the second model for each state of the fluid.

In a second aspect of the present invention, provided is a learning apparatus comprising a learning processing unit that generates, from intensity data of at least one frequency band related to a detection signal detected by a vortex flow meter for a fluid, a second model for estimating at least either of a liquid amount or dryness related to the fluid for each state of the fluid.

In a third aspect of the present invention, provided is a method comprising acquiring, by a computer, state data including intensity data of at least one frequency band related to a detection signal detected by a vortex flow meter for a fluid, estimating, by the computer, a state of the fluid based on the state data acquired, estimating, by the computer from the intensity data, at least either of a liquid amount or dryness related to the fluid according to the state of the fluid estimated, and outputting, by the computer, at least either of the liquid amount or the dryness estimated.

In a fourth aspect of the present invention, provided is a learning method comprising generating, by a computer from intensity data of at least one frequency band related to a detection signal detected by a vortex flow meter for a fluid, a second model for estimating at least either of a liquid amount or dryness related to the fluid for each state of the fluid.

In a fifth aspect of the present invention, provided is a program that causes a computer to function as an acquisition unit that acquires state data including intensity data of at least one frequency band related to a detection signal detected by a vortex flow meter for a fluid, a state determination estimation unit that estimates a state of the fluid based on the state data acquired by the acquisition unit, a fluid quality estimation unit that estimates, from the intensity data, at least either of a liquid amount or dryness related to the fluid according to the state of the fluid estimated by the state determination estimation unit, and an output unit that outputs at least either of the liquid amount or the dryness estimated by the fluid quality estimation unit.

In a sixth aspect of the present invention, provided is a learning program that causes a computer to function as a learning processing unit that generates, from intensity data of at least one frequency band related to a detection signal detected by a vortex flow meter for a fluid, a second model for estimating at least either of a liquid amount or dryness related to the fluid for each state of the fluid.

Note that the summary clause does not necessarily describe all necessary features of the embodiments of the present invention. The present invention may also be a sub-combination of the features described above.

### BRIEF DESCRIPTION OF THE DRAWINGS

Fig. 1 is an example of a block diagram illustrating a system 10 according to the present embodiment.
Fig. 2 is an explanatory diagram for explaining a flow regime of a fluid in a pipe 40.
Fig. 3 is flow diagram illustrating an example of an operation of a vortex flow meter 100 in a measurement apparatus 20 according to the present embodiment.
Fig. 4 is an explanatory diagram for explaining intensity data.
Fig. 5 is a flow diagram illustrating an example of an operation of an estimation apparatus 400 in the measurement apparatus 20 according to the present embodiment.
Fig. 6 is an explanatory diagram for explaining an example of a first model.
Fig. 7 is an explanatory diagram for explaining an example of a second model.
Fig. 8 illustrates an example of a computer 2200 in which a plurality of aspects of the present invention may be embodied wholly or or in part.

### DESCRIPTION OF EXEMPLARY EMBODIMENTS

Hereinafter, the present invention will be described through embodiments of the invention, but the following embodiments do not limit the invention according to claims. In addition, not all of the combinations of features described in the embodiments are essential to the solution of the invention.

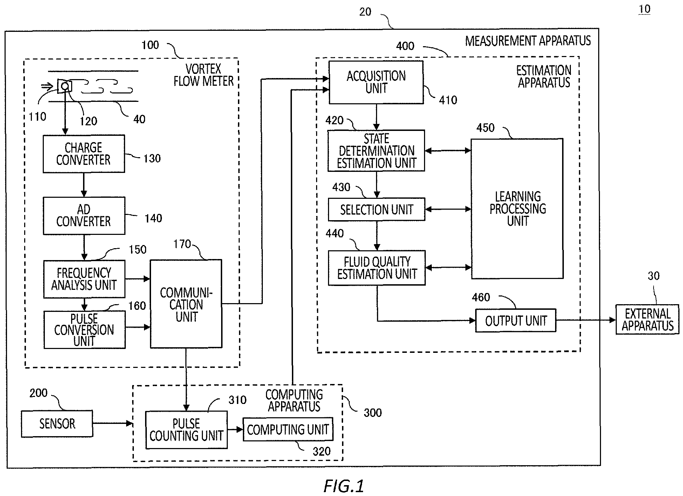

Fig. 1 is an example of a block diagram illustrating a system 10 according to the present embodiment. Note that, these blocks are functional blocks that are each functionally divided, and may not be necessarily required to be matched with actual apparatus configurations. That is, in the present drawing, an apparatus indicated by one block may not be necessarily required to be configured by one apparatus. In addition, in the present drawing, apparatuses indicated by separate blocks may not be necessarily required to be configured by separate apparatuses. The same applies to subsequent block diagrams.

The system 10 collects data from an instrument installed in a facility such as a plant. The plant includes industrial plants such as chemical or biological plants, as well as plants for managing and controlling well sites or surroundings thereof of gas fields, oil fields or the like, plants for managing and controlling power generation through hydroelectric power generation, thermal power generation, nuclear power generation or the like, plants for managing and controlling energy harvesting through solar power generation, wind power generation or the like, plants for managing and controlling water supply and sewerage, dams or the like. The system 10 comprises a measurement apparatus 20 and an external apparatus 30.

The measurement apparatus 20 measures a state of a fluid (a fluid to be measured) that flows inside a pipe 40. The measurement apparatus 20 comprises a vortex flow meter 100, a sensor 200, a computing apparatus 300, and an estimation apparatus 400.

The vortex flow meter 100 detects a vortex that is generated in the fluid to measure a volumetric flow rate or the like of the fluid that flows in the pipe 40. The vortex flow meter 100 has a vortex generator 110, a detection unit 120, a charge converter 130, an AD converter 140, a frequency analysis unit 150, a pulse conversion unit 160, and a communication unit 170.

The vortex generator 110 is provided in the pipe 40 through which the fluid to be measured flows. The detection unit 120 detects at least one detection signal according to the vortex (a Karman vortex) generated by the vortex generator 110 with which the fluid to be measured that flows through the pipe 40 collides. The detection unit 120 may output a first detection signal and a second detection signal each detected by two piezoelectric elements provided at two different places on the vortex generator 110. Each piezoelectric element outputs, as a detection signal, an electric charge according to stress at the place each piezoelectric element is provided in the vortex generator 110.

The charge converter 130 is connected to the detection unit 120. The charge converter 130 converts the electric charge of at least one detection signal into a voltage signal, thereby converting it into at least one detection signal in a voltage format. The charge converter 130 may convert each of the first detection signal and the second detection signal into a voltage signal. Note that, the charge converter 130 is unnecessary when the detection unit 120 outputs the detection signal in a voltage format or a current format.

The AD converter 140 is connected to the charge converter 130. The AD converter 140 converts at least one detection signal in a voltage format into at least one detection signal in a digital format. The AD converter 140 may convert each of the first detection signal and the second detection signal into a digital signal.

The frequency analysis unit 150 is connected to the AD converter 140. The frequency analysis unit 150 performs frequency analysis of the detection signal in the digital format input from the AD converter 140, and performs de-noising of the detection signal based on the frequency analysis. The frequency analysis unit 150 may divide the detection signal into a plurality of frequency bands, and perform frequency analysis based on intensity data representing the signal intensity of each frequency band (as an example, a maximum amplitude or average amplitude of a signal in each frequency band). The frequency analysis unit 150 may decide the frequency band including the vortex frequency of the detection signal and a factor λ for de-noising through the frequency analysis.

The pulse conversion unit 160 is connected to the frequency analysis unit 150. The pulse conversion unit 160 may generate a pulse signal representing a vortex frequency of the detection signal on which de-noising has been performed by the frequency analysis unit 150.

The communication unit 170 is connected to the frequency analysis unit 150 and the pulse conversion unit 160, and is connected to the computing apparatus 300 and the estimation apparatus 400 in a wired or wireless manner. The communication unit 170 is capable of communication with at least one of the computing apparatus 300 or the estimation apparatus 400 using a communication protocol defined by HART (registered trademark), BRAIN, Foundation field bus (registered trademark), ISA 100.11a or the like. The communication unit 170 may transmit, to the estimation apparatus 400, state data including the intensity data of at least one frequency band acquired by the frequency analysis unit 150. The communication unit 170 may transmit, to the computing apparatus 300, a pulse signal generated by the pulse conversion unit 160.

The sensor 200 is connected to the computing apparatus 300 in a wired or wireless manner. The sensor 200 may be, for example, at least one of a pressure sensor, a flow meter, a temperature sensor, a density meter, a viscosity meter, a concentration meter or the like. The sensor 200 may transmit, to the computing apparatus 300, state data, which is at least one of a flow speed, temperature, pressure, viscosity, concentration, or density measured for the fluid to be measured that flows in the pipe 40. The sensor 200 may be arranged inside or outside the detection unit 120 of the vortex flow meter 100, and may transmit the state data to the computing apparatus 300 via the communication unit 170.

The computing apparatus 300 is connected to the estimation apparatus 400. The computing apparatus 300 may be a computer such as a PC (personal computer), a tablet computer, a smartphone, a workstation, a server computer, or a general purpose computer, or may be a computer system in which a plurality of computers are connected. Such a computer system is also a computer in a broad sense. In addition, the computing apparatus 300 may be implemented by one or more virtual computer environments that can be executed in the computer. In addition, the computing apparatus 300 may be an internal computer of the vortex flow meter 100.

The computing apparatus 300 calculates one or more state data from the data received from the sensor 200 or the vortex flow meter 100. The computing apparatus 300 may calculate the state data of the fluid from the pulse signal received from the vortex flow meter 100. The computing apparatus 300 has a pulse counting unit 310 and a computing unit 320.

The pulse counting unit 310 is connected to the computing unit 320. The pulse counting unit 310 measures a pulse count per unit of time of the pulse signal (that is, the vortex frequency) by performing pulse count of the pulse signal received from the vortex flow meter 100.

The computing unit 320 calculates at least one of the pressure, the flow speed, the volumetric flow rate, the density, or the mass flow rate of the fluid from the vortex frequency measured by the pulse counting unit 310. The computing apparatus 300 outputs, to the estimation apparatus 400, the state data including at least one of the pressure, the flow speed, the volumetric flow rate, the density, or the mass flow rate calculated by the computing unit 320. In addition, the computing apparatus 300 may transmit, to the estimation apparatus 400, the state data including at least one of the flow speed, the temperature, the pressure, the viscosity, the concentration, or the density received from the sensor 200.

The estimation apparatus 400 is connected to the external apparatus 30. The estimation apparatus 400 may be a computer such as a PC, a tablet computer, a smartphone, a workstation, a server computer, or a general purpose computer, or may be a computer system in which a plurality of computers are connected. Such a computer system is also a computer in a broad sense. Also, the estimation apparatus 400 may be implemented by one or more virtual computer environments which can be executed in a computer. In addition, the estimation apparatus 400 may be an internal computer of the vortex flow meter 100.

The estimation apparatus 400 estimates at least either of a liquid amount or dryness of the fluid based on the state data related to the fluid detected by the vortex flow meter 100. The estimation apparatus 400 comprises an acquisition unit 410, a state determination estimation unit 420, a selection unit 430, a fluid quality estimation unit 440, a learning processing unit 450, and an output unit 460.

Herein, the fluid in the present embodiment may include at least one gas (vapor) from which water or the like has evaporated or liquid obtained by condensation of gas. In addition, the estimated liquid amount indicates, for example, the mass occupied by the liquid condensed in the vapor. The dryness to be estimated indicates, for example, a ratio of a mass of gas vapor to a mass of vapor.

The acquisition unit 410 is connected to the communication unit 170 and the computing apparatus 300. The acquisition unit 410 acquires, from the communication unit 170, the state data including intensity data of at least one frequency band related to the detection signal detected by the vortex flow meter 100 for the fluid. The acquisition unit 410 may acquire, from the computing apparatus 300, the state data including at least one of the flow speed, the temperature, the pressure, the viscosity, the concentration, or the density measured for the fluid. The acquisition unit 410 may acquire the state data of at least one of the pressure, the flow speed, the volumetric flow rate, the density, or the mass flow rate of the fluid calculated based on the pulse signal by the computing apparatus 300.

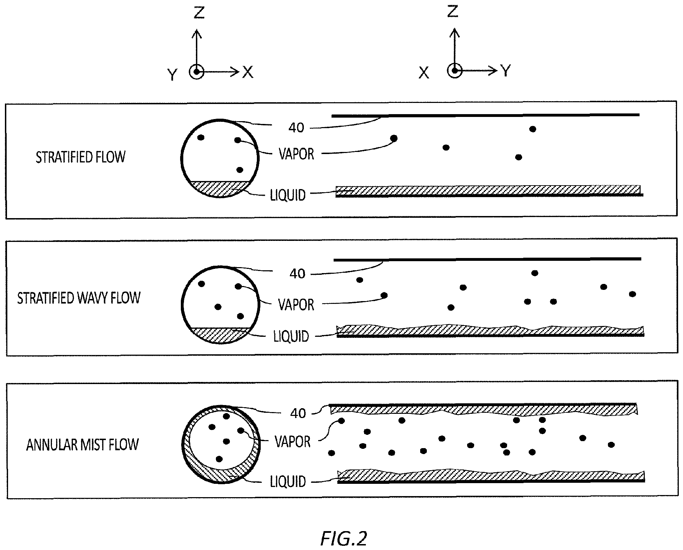

The state determination estimation unit 420 is connected to the acquisition unit 410. The state determination estimation unit 420 estimates the state of the fluid based on the state data acquired by the acquisition unit 410. The state determination estimation unit 420 may estimate the flow regime of the fluid in the pipe 40 as the state of the fluid based on the state data acquired by the acquisition unit 410. Note that the flow regime will be described later with reference to Fig. 2. The state determination estimation unit 420 may estimate the state of the fluid based on the state data acquired by the acquisition unit 410 by using a first model for estimating the state of the fluid from the state data.

The selection unit 430 is connected to the state determination estimation unit 420. The selection unit 430 selects a computation corresponding to the estimated state of the fluid from a plurality of computations. The selection unit 430 may select a computation different depending on the flow regime of the fluid.
The selection unit 430 may select a second model corresponding to the state of the fluid estimated by the state determination estimation unit 420 from a plurality of second models for estimating at least either of a liquid amount or dryness related to the fluid from the intensity data of at least one frequency band related to the detection signal of the fluid according to the state of the fluid.

The fluid quality estimation unit 440 is connected to the selection unit 430. The fluid quality estimation unit 440 estimates at least either of the liquid amount or dryness related to the fluid from the intensity data acquired by the acquisition unit 410 according to the state of the fluid estimated by the state determination estimation unit 420. The fluid quality estimation unit 440 may estimate at least either of the liquid amount or dryness related to the fluid from the intensity data acquired by the acquisition unit 410 through the computation selected by the selection unit 430. The fluid quality estimation unit 440 may estimate at least either of the liquid amount or dryness related to the fluid from the intensity data acquired by the acquisition unit 410 by using the second model selected by the selection unit 430.

The learning processing unit 450 is connected to the state determination estimation unit 420, the selection unit 430, and the fluid quality estimation unit 440. The learning processing unit 450 performs learning processing of a plurality of models used in the estimation apparatus 400. The learning processing unit 450 may generate a first model for estimating the state of the fluid from the intensity data of at least one frequency band related to the detection signal of the fluid. The learning processing unit 450 may generate a second model for each state of the fluid.

The output unit 460 is connected to the fluid quality estimation unit 440 and the external apparatus 30. The output unit 460 outputs, to the external apparatus 30, at least either of the liquid amount or dryness estimated by the fluid quality estimation unit 440.

The external apparatus 30 may be a display apparatus that displays an estimation result of the estimation apparatus 400, or a PC that stores the estimation result of the estimation apparatus 400 or the like.

Fig. 2 is an explanatory diagram for explaining the flow regime of the fluid in the pipe 40. Fig. 2 illustrates a XZ cross section and a YZ cross section in the pipe 40 for each of the stratified flow, the stratified wavy flow, and the annular mist flow, which are the flow regimes. In Fig. 2, the fluid flows in a Y axis direction in the pipe 40.

For example, the fluid containing evaporated water has three flow states (flow regimes) in a state of wet vapor in which liquid water is mixed with gas vapor. In the stratified flow, the liquid flows gently at the bottom of the pipe 40. In the stratified wavy flow, the liquid flows while creating waves at the bottom of the pipe 40. In the annular mist flow, the liquid flows in contact with the entire circumference of the inner wall of the pipe 40, and the number of droplets mixed with the vapor increases. Flow regimes such as these changes according to gas flow speed and wetness of the fluid. The state of the Karman vortex in the measurement of the vortex flow meter 100 and the detection signal that detects the vortex are different for the three flow regimes, and its influence on the measurement related to the fluid is also different. For such a state of the fluid, the same applies to fluids other than the evaporated water.

Therefore, in the present embodiment, the liquid amount or dryness of the fluid, which is an indicator of vapor quality, is estimated through a computation according to the state of the fluid.

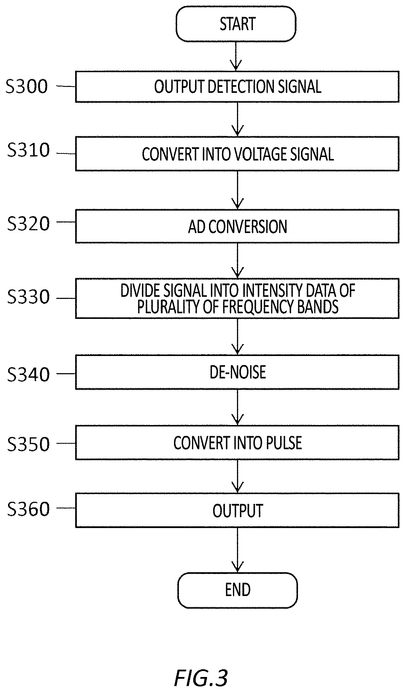

Fig. 3 is flow diagram illustrating an example of an operation of a vortex flow meter 100 according to the present embodiment. At step S300, in the vortex flow meter 100, the fluid to be measured flows in the pipe 40, and when the flow speed becomes a certain flow speed or higher, a vortex called a Karman vortex is generated downstream the vortex generator 110. The Karman vortex is alternately generated on the left and right (or above or below) about the axis of the vortex generator 110, and the pressure in the fluid is changed by generation of the vortex. The two piezoelectric elements of the detection unit 120 each output the electric charge according to the pressure at the installed place as the first detection signal and the second detection signal.

At step S310, the charge converter 130 converts the first detection signal and the second detection signal, which are electric charge signals, into voltage signals through a charge amplifier. The charge converter 130 may then amplify signal levels of the first detection signal and the second detection signal in the voltage format through a gain amplifier.

At step S320, the AD converter 140 converts, into a digital signal, each of the first detection signal and the second detection signal in an analog format converted into a voltage format by the charge converter 130.

At step S330, the frequency analysis unit 150 may divide each of the first detection signal and the second detection signal in a digital format into a plurality of frequency bands, and acquire intensity data representing the signal intensity of each frequency band. The frequency analysis unit 150 may divide the detection signal into a plurality of predetermined frequency band according to the inner diameter of the pipe 40 through which the fluid to be measured flows or the kind of the fluid to be measured. For example, the frequency analysis unit 150 may divide the first detection signal into a plurality of frequency bands (for example, an octave band) obtained by dividing the entire frequency band (for example, 0 to 15 KHz), which is the measurement target of the vortex frequency, and acquire the intensity data representing the signal intensity of each frequency band. The frequency analysis unit 150 may divide the second detection signal into a plurality of frequency bands, similarly to the first detection signal, and acquire the intensity data representing the signal intensity of each frequency band.

For example, the frequency analysis unit 150 may divide the detection signal into a plurality of frequency bands through a bandpass filter. As an example, the frequency analysis unit 150 has a plurality of bandpass filters associated in a one-to-one manner with the plurality of frequency bands obtained by dividing the entire frequency band which the vortex flow meter 100 targets, and each bandpass filter may have a configuration in which it passes a signal component in the detection signal that is in the assigned passing frequency band, and reduces or removes signal components that is outside the band. Alternatively, the frequency analysis unit 150 may calculate the signal intensity of the detection signal in each frequency band by performing Fourier conversion of the detection signal to convert it into a signal in a frequency region.

The frequency analysis unit 150 may output, to the communication unit 170, intensity data of one frequency band among the plurality of divided frequency bands. In addition, the frequency analysis unit 150 may transmit the intensity data of a plurality of divided frequency bands, for example, the intensity data of all frequency bands to the estimation apparatus 400 via the communication unit 170. The frequency analysis unit 150 may transmit, along with the intensity data, data representing the frequency band corresponding to said intensity data to the estimation apparatus 400 via the communication unit 170.

At step S340, the frequency analysis unit 150 removes noises in the detection signal by using the intensity data of a plurality of frequency bands to acquire a vortex signal (a signal that generates a frequency that is proportionate to the flow speed generated by the Karman vortex).

First, the frequency analysis unit 150 identifies a frequency band (also referred to as a vortex frequency band) that includes a vortex frequency of the vortex signal. The frequency analysis unit 150 may identify, as the vortex frequency band, the frequency band including the intensity data with the largest signal intensity in the entire frequency band.

In addition, the frequency analysis unit 150 identifies the frequency band including the intensity data with the largest signal intensity in the entire frequency band. In the identified frequency band including the largest intensity data, the frequency analysis unit 150 may calculate a signal ratio of said largest intensity data and the intensity data of the other detection signal (that is, the signal intensity ratio of the signal intensity of the first detection signal and the signal intensity of the second detection signal identified frequency band). The frequency analysis unit 150 may identify said frequency band as the vortex frequency band if the calculated signal ratio is within a predetermined range. When the calculated signal ratio is not within he predetermined range, the frequency analysis unit 150 may similarly decide whether the calculated signal ratio is within the predetermined range for the frequency band including the next (in this case, second) largest intensity data. Note that, the predetermined range may be set according to at least one of the frequency band that is presumed to be the Karman vortex generating frequency calculated from the flow speed of the fluid to be measured, the kind of the fluid to be measured, or the inner diameter of the pipe 40 through which the fluid to be measured flows.

The frequency analysis unit 150 then decides the factor λ for removing noises of the detection signal by using the intensity data of the frequency band other than the identified vortex frequency band. The frequency analysis unit 150 may decide the factor λ for removing the noises by using the intensity data of the frequency band other than the identified vortex frequency band and at least one frequency band that is adjacent before and after said vortex frequency band.

In the frequency band other than the vortex frequency band, the frequency analysis unit 150 may decide, as the factor λ, a signal ratio that is equal to or more than a predetermined minimum signal ratio among the signal ratios (the ratio of the signal intensity of the first detection signal and the signal intensity of the second detection signal) in the frequency band including the signal intensity that is equal to or more than a predetermined threshold. In this case, the frequency analysis unit 150 may decide the factor λ by using the signal ratio of the frequency band in which a signal intensity of the detection signal, among the first detection signal and the second detection signal, which is the same as the detection signal with the largest signal intensity in the entire frequency band is equal to or more than the predetermined threshold. When there is no signal that satisfies the condition described above, the frequency analysis unit 150 may omit the de-noising, and output, to the pulse conversion unit 160, the first detection signal of the vortex frequency band. Note that, the predetermined threshold may be set according to at least one of the kind of the fluid to be measured or the inner diameter of the pipe 40 through which the fluid to be measured flows. In addition, the predetermined minimum signal ratio may be set according to the inner diameter of the pipe 40 through which the fluid to be measured flows.

The frequency analysis unit 150 then removes noises in the detection signal by using the factor λ decided. The frequency analysis unit 150 may remove the noise through linear combination of the first detection signal A and the second detection signal B output from the AD converter 140 by the factor λ. In this manner, the frequency analysis unit 150 can generate a combination signal C (a vortex flow rate signal) including a component of the vortex signal (C = A - λB).

The frequency analysis unit 150 may then extract, from the combined signal, the signal component of the vortex frequency band identified at step S340 to generate a signal having the vortex frequency. For the combined signal, the frequency analysis unit 150 passes the signal component within the vortex frequency band and reduces or removes signal components that are out of said vortex frequency band by using a bandpass filter, for example. The frequency analysis unit 150 outputs the extracted combined signal of the vortex frequency band to the pulse conversion unit 160. As an example, this extracted combined signal of the vortex frequency band is a signal that has a shape of an approximately sine wave.

The frequency analysis unit 150 may transmit the intensity data representing the signal intensity of at least one frequency band for the combined signal as the state data to the estimation apparatus 400 via the communication unit 170. For example, the frequency analysis unit 150 may divide the combined signal into a plurality of frequency bands that are the same as the plurality of frequency bands divided at step S330 by using a plurality of bandpass filters with different passing frequency bands. The frequency analysis unit 150 may output, to the communication unit 170 as the state data, at least one of the plurality of pieces of intensity data respectively representing the signal intensity of a plurality of frequency bands obtained by dividing the combined signal. The frequency analysis unit 150 may transmit, along with the intensity data of the combined signal, data representing the frequency band corresponding to said intensity data to the estimation apparatus 400 via the communication unit 170.

At step S350, the pulse conversion unit 160 may generate a pulse signal having the same frequency as that of the combined signal received from the frequency analysis unit 150.

At step S360, the communication unit 170 outputs, to the computing apparatus 300, a pulse signal representing the vortex frequency of the detection signal generated based on the intensity data of at least one frequency band. The communication unit 170 may transmit the pulse signal that is converted into a pulse by the pulse conversion unit 160 to the computing apparatus 300. In this manner, the computing apparatus 300 can perform pulse count of the received pulse signals, and calculate the frequency according to the number of Karman vortexes generated per unit of time.

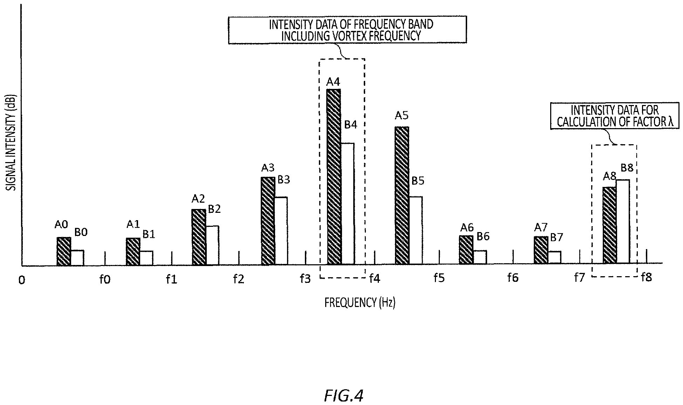

Fig. 4 illustrates the signal intensity of the detection signal of the vortex flow meter 100 in a plurality of frequency bands. Fig. 4 illustrates the intensity data representing the signal intensity in each frequency band obtained by dividing each of the first detection signal and the second detection signal in a digital format into a plurality of frequency bands by the frequency analysis unit 150 at step S330 illustrated in Fig. 3. In Fig. 4, the vertical axis indicates the signal intensity, and the horizontal axis indicates the frequency. In Fig. 4, A0 to A8 each represent the signal intensity of the first detection signal at frequency bands 0 - f0, f0 - f1, f1 - f2, f2 - f3, f3 - f4, f4 - f5, f5 - f6, f6 - f7, and f7 - f8, and B0 to B8 each represent the signal intensity of the second detection signal at frequency bands 0 - f0, f0 - f1, f1 - f2, f2 - f3, f3 - f4, f4 - f5, f5 - f6, f6 - f7, and f7 - f8. The values of the frequencies f0 to f8 are each set according to at least one of the inner diameter of the pipe 40 through which the fluid to be measured flows or the kind of the fluid to be measured.

The frequency analysis unit 150 determines whether the frequency band f3 - f4 including the intensity data A4 with the largest signal intensity in the entire frequency band f0 - f8 is a vortex frequency band. The frequency analysis unit 150 calculates the signal ratio (A4/B4), and when the calculated signal ratio is within a predetermined range, identifies said frequency band f3 - f4 as the vortex frequency band.

The frequency analysis unit 150 decides the factor λ for the de-noising by using the intensity data of the frequency band excluding the frequency band f3 - f4 and the frequency bands f2 - f3, f4 - f5, which are before and after the frequency band f3 - f4. The frequency analysis unit 150 may decide a signal ratio A8/B8 to be the factor λ when the signal ratio A8/B8 in the frequency band f7 - f8, among the frequency bands other than the frequency bands f3 - f4, f2 - f3, and f4 -f5, including the signal intensity A8, which is equal to or larger than a predetermined threshold, is equal to or larger than a predetermined minimum signal ratio.

The frequency analysis unit 150 generates a combination signal C through linear combination of the first detection signal A and the second detection signal B output from the AD converter 140 by the factor λ by using the decided factor λ (C = A - λB). The frequency analysis unit 150 then divides, by using a plurality of bandpass filters with different passing frequency bands, the combination signal C into a plurality of frequency bands 0 - f0, f0 - f1, f1 - f2, f2 - f3, f3 - f4, f4 - f5, f5 - f6, f6 - f7, f7 - f8, and acquires the combination signal C0 of the frequency band 0 - f0, the combination signal C1 of the frequency band f0 - f1, the combination signal C2 of the frequency band f1 - f2, the combination signal C3 of the frequency band f2 - f3, the combination signal C4 of the frequency band f3 - f4, the combination signal C5 of the frequency band f4 - f5, the combination signal C6 of the frequency band f5 - f6, the combination signal C7 of the frequency band f6 - f7, and the combination signal C8 of the frequency band f7 - f8.

The frequency analysis unit 150 outputs the combination signal C4 to the pulse conversion unit 160. The pulse conversion unit 160 generates a pulse signal having a same frequency as that of the combination signal C4, and transmits the pulse signal to the computing apparatus 300 via the communication unit 170. The computing apparatus 300 calculates, from the received pulse signal, the frequency according to the number of Karman vortexes generated per unit of time.

The frequency analysis unit 150 transmits, to the estimation apparatus 400 via the communication unit 170, at least one of the intensity data representing the signal intensity of the combination signals C0 - C8 in a plurality of frequency bands (in particular, the intensity data representing the signal intensity of the combination signal C4). The frequency analysis unit 150 may transmit data representing the corresponding frequency band along with the intensity data to the estimation apparatus 400 via the communication unit 170.

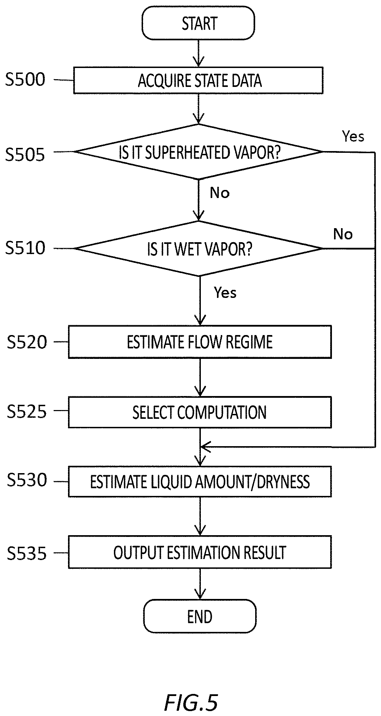

Fig. 5 is a flow diagram illustrating an example of an operation of the estimation apparatus 400 according to the present embodiment. The estimation apparatus 400 may start an estimation operation upon receiving the state data from the vortex flow meter 100 and the computing apparatus 300.

At step S500, the acquisition unit 410 acquires the state data for the fluid to be measured. The acquisition unit 410 acquires, as the state data, the digital signal representing the intensity data of at least one frequency band transmitted from the communication unit 170 of the vortex flow meter 100. The acquisition unit may acquire the state data including the intensity data of a plurality of frequency bands related to the detection signal of the fluid detected by the vortex flow meter 100. The acquisition unit 410 may further acquire data representing the corresponding frequency band along with the intensity data. The acquisition unit 410 may acquire the state data including at least one of the flow speed, the temperature, the pressure, the viscosity, the concentration, the density, or the vortex frequency from the computing apparatus 300. The estimation apparatus 400 uses the state data from the computing apparatus 300 along with the intensity data, enabling improvement in the accuracy of state estimation related to the fluid and the accuracy of estimation of the liquid amount or dryness.

The acquisition unit 410 may periodically receive the state data. The acquisition unit 410 may output, to the state determination estimation unit 420 and the fluid quality estimation unit 440, the plurality of pieces of state data acquired at the same time or at the same cycle from the vortex flow meter 100 and the computing apparatus 300 in association with one another. In the following steps, the state determination estimation unit 420 and the fluid quality estimation unit 440 may perform the estimation for each set of associated state data acquired at the same time or at the same cycle by the acquisition unit 410 from the vortex flow meter 100 and the computing apparatus 300.

The acquisition unit 410 may perform pretreatment on the acquired intensity data, and output the pretreated intensity data to the state determination estimation unit 420 and the fluid quality estimation unit 440. The acquisition unit 410 may calculate a combined value of the plurality of pieces of intensity data when intensity data of a plurality of frequency bands is acquired. For example, the acquisition unit 410 may calculate a sum value or average value of intensity data of all or a part of the plurality of pieces of intensity data, and output said sum value or average value of the intensity data to the state determination estimation unit 420 and the fluid quality estimation unit 440. The acquisition unit 410 may acquire, as the pretreated intensity data, a sum value, a difference, a ratio, or a multiplied value of the maximum intensity data and the intensity data of a frequency band that is adjacent to the frequency band corresponding to said maximum intensity data, among the plurality of pieces of intensity data.

In addition, the acquisition unit 410 may acquire the intensity data normalized through the pretreatment. The acquisition unit 410 may normalize the intensity data based on reference intensity data. For example, the acquisition unit 410 may calculate a difference or a ratio of the acquired intensity data and the reference intensity data, and acquire the calculated value as the normalized intensity data. Note that, the acquisition unit 410 may have prestored therein the reference intensity data corresponding to each of the plurality of frequency bands, or may use the reference intensity data corresponding to the frequency band of the intensity data to be pretreated. The acquisition unit 410 may use, as the reference intensity data, prestored intensity data at a normal state (for example, the state upon start of the operation) of the vortex flow meter 100, or the intensity data acquired at a time point before the acquisition of the intensity data to be pretreated. The estimation apparatus 400 can prevent the estimation accuracy from being reduced due to a change in the detection signal caused by individual differences or replacement of parts of the vortex flow meter 100 or the like, by normalizing the intensity data.

The acquisition unit 410 may output at least one the pretreated intensity data (the pretreated intensity data may also be referred to simply as the intensity data) or the intensity data that is not pretreated to the state determination estimation unit 420.

At step S505, the state determination estimation unit 420 determines whether the state of the fluid is a superheated vapor based on the state data of the fluid acquired by the acquisition unit 410. The state determination estimation unit 420 may determine whether the state of the fluid is a superheated vapor by comparing at least one of the state data acquired by the acquisition unit 410 with a threshold. For example, the state determination estimation unit 420 may determine the state of the fluid to be a superheated vapor (that is, not a wet vapor) in response to the measurement value of the temperature of the fluid exceeding a boiling point of the fluid (a boiling point of the liquid included in the fluid) based on a measurement value of the pressure of the fluid acquired by the acquisition unit 410. As an example, the state determination estimation unit 420 may acquire, from a vapor curve of the liquid in the fluid, a boiling point corresponding to the measurement value of the pressure of the fluid, and when the measurement value of the temperature of the fluid exceeds the boiling point, determine the fluid to be a superheated vapor. In such a case where the measurement value of the temperature of the fluid exceeds the boiling point of the fluid (Yes at step S505), the estimation apparatus 400 proceeds to step S530, and when the measurement value of the temperature of the fluid is equal to or lower than the boiling point of the fluid (No at step S505), the estimation apparatus 400 may proceed to step S510.

In addition, the state determination estimation unit 420 may decide that the state of the fluid is a superheated vapor when the signal intensity representing the intensity data is within a predetermined range. Being within the predetermined range may be to be within a range of signal intensity in a case of a superheated vapor obtained in advance through experiments or the like.

At step S510, the state determination estimation unit 420 determines whether the state of the fluid is a wet vapor based on the state data of the fluid acquired by the acquisition unit 410. The state determination estimation unit 420 may determine whether the fluid is a wet vapor based on at least one of the acquired measurement values of the state data by using a wet vapor determination model for estimating whether the fluid is a wet vapor from at least one of the measurement values of the state data. The wet vapor determination model may be a model that outputs a determination result, such as logistic regression, neural network, support vector machine, classification tree, change point detection, k-nearest neighbor, or k-means technique.

In addition, the state determination estimation unit 420 may determine that the state of the fluid is a wet vapor (that is, not a superheated vapor) in response to the measurement value of the temperature of the fluid included in the state data being less than the boiling point of the fluid. In this case, the state determination estimation unit 420 may determine the state of the fluid by using a vapor curve.

The state determination estimation unit 420 determines, through step S505 and step S510, whether the state of the fluid is a wet vapor by using the state data acquired by the acquisition unit 410. The estimation apparatus 400 may proceed to step S520 when the fluid is determined not to be a superheated vapor at step S505 and the fluid is determined to be a wet vapor at step S510 (Yes at S510), and may proceed to step S530 when the fluid is determined not to be a wet vapor (No at S510).

At step S520, the state determination estimation unit 420 estimates which of a stratified flow, a stratified wavy flow, or an annular mist flow the state of the fluid is based on the state data acquired by the acquisition unit 410. The state determination estimation unit 420 may estimate the flow regime of the fluid by using a first model for estimating the state of the fluid from the state data related to the fluid. The first model may be a classification model, or may be a model such as logistic regression, neural network, support vector machine, classification tree, change point detection, k-nearest neighbor, or k-means technique.

The state determination estimation unit 420 may estimate the state of the fluid according to which of the range corresponding to the stratified flow, a range corresponding to the stratified wavy flow, or a range corresponding to the annular mist flow the acquired intensity data belongs to. The range corresponding to the stratified flow, the range corresponding to the stratified wavy flow, and the range corresponding to the annular mist flow may be ranges of signal intensity acquired in advance through experiments for each state.

At step S525, the selection unit 430 selects a computation according to the state of the fluid estimated by the state determination estimation unit 420 from a plurality of computations for estimating at least either of a liquid amount or dryness. The selection unit 430 may select a second model corresponding to the flow regime of the fluid estimated by the state determination estimation unit 420 from a second model corresponding to the stratified flow, a second model corresponding to the stratified wavy flow, or a second model corresponding to the annular mist flow. The plurality of second models may be generated by learning processing for each corresponding flow regime, and may be different from each other. The selection unit 430 may use a plurality of second models previously generated by the learning processing unit 450.

The second model may be a regression model, or may be a model such as multiple regression analysis, neural network, support vector regression, Gaussian process regression, regression tree, autoregressive model, logistic regression, classification tree, change point detection, k-nearest neighbor, or k-means technique. The neural network may include convolutional neural network, recurrent neural network, or long short-term memory neural network. Note that, the second model may be generated through learning processing by using the intensity data representing the signal intensity of a piezoelectric element measured by the vortex flow meter 100 or the pretreated intensity data as training data, and the dryness or liquid amount corresponding to said intensity data as teacher data.

The second model may be a regression model that outputs the dryness or liquid amount according to an input of the intensity data of at least one frequency band. As an example, the second model can output the dryness or liquid amount of the fluid to be measured with the intensity data of the frequency band including the vortex frequency as the input. When the fluid (vapor) becomes more wet, since the signal intensity of the detection signal of the piezoelectric element is lowered due to moisture included in the vapor, the signal intensity of the piezoelectric element detected by the vortex flow meter 100 is correlated to the dryness or liquid amount of the fluid to be measured (for example, a linear relationship). Therefore, the second model may be a model that outputs greater dryness or smaller liquid amount according to the input of the intensity data of greater signal intensity.

At step S530, the fluid quality estimation unit 440 estimates at least either of the liquid amount or dryness related to the fluid from the intensity data. The fluid quality estimation unit 440 may estimate at least either of the liquid amount or dryness related to the fluid from intensity data of a plurality of frequency bands. The fluid quality estimation unit 440 may estimate at least either of the liquid amount or dryness related to the fluid from a maximum value of the intensity data of the plurality of frequency bands or a combined value of intensity data of the plurality of frequency bands through pretreatment by the acquisition unit 410. The fluid quality estimation unit 440 may estimate at least either of the liquid amount or dryness related to the fluid from the intensity data normalized through pretreatment by the acquisition unit 410.

The fluid quality estimation unit 440 may define, as the estimation result, at least either of the liquid amount or dryness output in response to the intensity data acquired by the acquisition unit 410 being input to the second model selected by the selection unit 430. The fluid quality estimation unit 440 may define, as the estimation result, at least either of the liquid amount or dryness output in response to the intensity data of a predetermined frequency band (as an example, the frequency band including the vortex frequency) among the plurality of frequency bands being input to the second model. The fluid quality estimation unit 440 may input, along with the intensity data, data representing the corresponding frequency band to the second model.

According to the estimated state of the fluid, the fluid quality estimation unit 440 may estimate at least either of the liquid amount or dryness related to the fluid from the acquired intensity data, and the state data including at least one of the flow speed, the temperature, the pressure, the viscosity, the concentration, or the density measured for the fluid. The fluid quality estimation unit 440 may input, to the second model, all kinds of the state data acquired by the acquisition unit 410, or may input, to the second model, the state data representing a predetermine kind of measurement value among the flow speed, the temperature, the pressure, the viscosity, the concentration, and the density acquired by the acquisition unit 410, along with the intensity data. The fluid quality estimation unit 440 may estimate one of the liquid amount or dryness, and from said estimated one, calculate the other of the liquid amount or dryness by using the flow rate of the vapor of the fluid.

The fluid quality estimation unit 440 may estimate that the liquid amount related to the fluid is 0 or that the dryness related to the fluid is 100% when it is determined that the state of the fluid is not a wet vapor by the state determination estimation unit 420 at step S505 or S510. Since it is determined by the state determination estimation unit 420 that the fluid is a superheated vapor or that the fluid is not a wet vapor, the fluid quality estimation unit 440 may define liquid amount 0 or dryness 100% as the estimation result. In this case, the fluid quality estimation unit 440 may calculate, from the state data, enthalpy or heat quantity of the superheated vapor as the estimation result related to the fluid.

At step S535, the output unit 460 outputs the estimation result of the fluid quality estimation unit 440 to the external apparatus 30. The output unit 460 may output display data for displaying the estimation result on the external apparatus 30. In addition, the output unit 460 may output data for notifying a user of the estimation result by an alarm or the like of the external apparatus 30. As an example, the output unit 460 may output data for notifying the user by an alarm of the external apparatus 30 when the liquid amount or dryness, which is the estimation result, exceeds a predetermined threshold or is equal to or less than the predetermined threshold. The predetermined threshold may be set in advance by the user or the like. In addition, the output unit 460 may output, to the external apparatus 30, control data for performing the control of a plant according to the estimation result, and the external apparatus 30 may control the plant according to the control data.

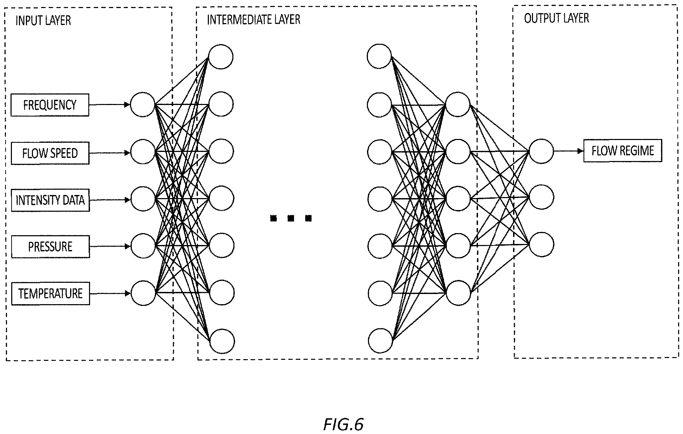

Fig. 6 is an explanatory diagram for explaining an example of the first model. In the example of Fig. 6, the first model is a model of a neural network, and each node is represented by a circle. In the first model, state data (the vortex frequency, the flow speed, the intensity data, the pressure, and the temperature) related to the fluid acquired from the vortex flow meter 100 and the computing apparatus 300 by the acquisition unit 410 s input to each node of the input layer, and the estimation result of the flow regime of the fluid is output to nodes of the output layer. Three nodes of the output layer include a node to which a computation result related to a stratified flow (for example, the probability that the fluid is a stratified flow) is output, a node to which a computation result related to a stratified wavy flow (for example, the probability that the fluid is a stratified wavy flow), is output, and a node to which a computation result related to an annular mist flow (for example, the probability that the fluid is an annular mist flow) is output.

Any number of layers and number of neurons may be set for an intermediate layer of the first model. A general nonlinear function such as a ramp function, a sigmoid function, or a hyperbolic tangent function may be set as the activation function of the first model. From the viewpoint of an error backpropagation method, the output layer may be provided with a softmax function at the time of multi-value classification.

In the first model, in response to the state data being input to the input layer, computation results according to the weight assigned among nodes in the intermediate layer are output to nodes of the output layer, and the state determination estimation unit 420 may output the flow regime with the highest probability as the state of the fluid. Note that, the state determination estimation unit 420 may normalize each value of the state data to a predetermined range and input the normalized value to each node of the input layer. The learning processing unit 450 may perform learning processing by using a set of data of a plurality of measurement values of the state data as the training data and the flow regime related to the measurement value as teacher data and optimize the weight to thereby generate the first model.

The state data in each flow regime used for the learning processing may be data obtained in advance through experiments, simulations, or operation or the like of a plant. As an example, the state data may be state data in each flow regime acquired via a user or automatically from an experiment apparatus by controlling the flow regime in the pipe 40 through an experiment. In addition, the state data may be acquired for each flow regime decided by the user observing the state of the fluid in an experiment or operation of the plant. In addition, the state data may be acquired for each flow regime identified by the user from a simulation result of the fluid in the pipe 40, and may be acquired for each flow regime identified automatically from the state of a system being simulated.

Note that, the first model has at least one of the nodes of the input layer, and all or a part of the plurality of measurement values of the state data acquired by the acquisition unit 410 may be input to the nodes of the input layer. In addition, the wet vapor determination model may be a model similar to the first model, and may be subjected to learning processing similar to that of the first model.

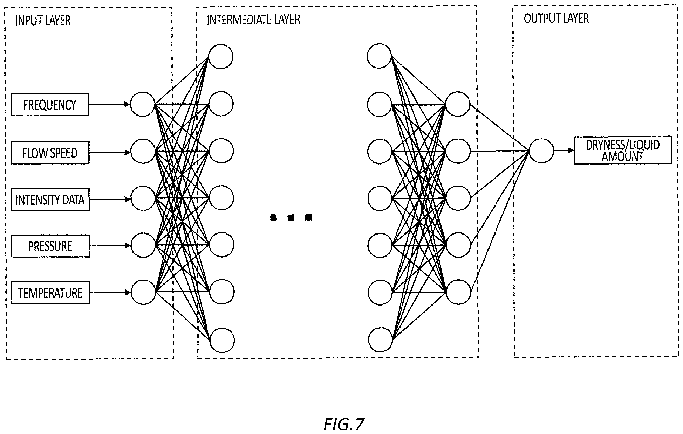

Fig. 7 is an explanatory diagram for explaining an example of the second model. In the example of Fig. 7, the second model is a model of a neural network, and each node is represented by a circle. In the second model, state data (the vortex frequency, the flow speed, the intensity data, the pressure, and the temperature) related to the fluid acquired from the vortex flow meter 100 and the computing apparatus 300 by the acquisition unit 410 s input to each node of the input layer, and the liquid amount or dryness of the fluid is output to nodes of the output layer. Any number of layers and number of neurons may be set for an intermediate layer of the second model. A general nonlinear function such as a ramp function, a sigmoid function, or a hyperbolic tangent function may be set as the activation function of the second model. From the viewpoint of an error backpropagation method, the output layer may be provided with a softmax function at the time of multi-value classification.

In the second model, in response to the state data being input to the input layer, computation results (the liquid amount or dryness) according to the weight assigned among nodes of the intermediate layer are output to nodes of the output layer, and the fluid quality estimation unit 440 may output said output liquid amount or dryness as the estimation result. Note that, the fluid quality estimation unit 440 may normalize each value of the state data to a predetermined range and input the normalized value to each node of the input layer. The learning processing unit 450 may perform learning processing by using a set of data of a plurality of kinds of state data obtained for each flow regime as training data and optimize the weight to thereby generate the second model. The learning processing unit 450 may generate the second model corresponding to the stratified flow by using, as the training data, a plurality of kinds of state data in a case where the fluid is a stratified flow. The learning processing unit 450 may generate the second model corresponding to the stratified wavy flow by using, as the training data, a plurality of kinds of state data in a case where the fluid is a stratified wavy flow. The learning processing unit 450 may generate the second model corresponding to the annular mist flow by using, as the training data, a plurality of kinds of state data in a case where the fluid is an annular mist flow.

The state data in each flow regime used for the learning processing may be data obtained in advance through experiments, simulations, or operation or the like of a plant. The state data may be that acquired through a method similar to the state data used for learning processing of the first model.

Note that, the second model has at least one of the nodes of the input layer, and all or a part of the plurality of kinds of state data acquired by the acquisition unit 410 may be input to the nodes of the input layer.

The estimation apparatus 400 in the present embodiment has high estimation accuracy since it can estimate the liquid amount or dryness by using a model corresponding to the state of the fluid. In addition, since the estimation apparatus 400 uses the intensity data in a digital format generated by the vortex flow meter 100 for the estimation operation, no additional configuration is required in the estimation apparatus 400 for processing of an analog signal, which enables a simple configuration to process digital values in the estimation operation.

Note that, the fluid quality estimation unit 440 may estimate the liquid amount or dryness by using a function or a table that defines the relationship between the intensity data and the liquid amount or dryness. In addition, the acquisition unit 410 may not perform pretreatment of the intensity data, in which case, the vortex flow meter 100 may perform pretreatment of the intensity data similar to step S500 and transmit said pretreated intensity data to the estimation apparatus 400. In this manner, the estimation apparatus 400 can use the pretreated intensity data for the estimation operation.

In addition, the estimation apparatus 400 may not have the learning processing unit 450, and the estimation apparatus 400 may have a first model generated by an external learning apparatus and a second model generated by an external learning apparatus prestored therein. In this case, the state determination estimation unit 420 may estimate the state of the fluid by using the stored first model, and the fluid quality estimation unit 440 may estimate at least either of the liquid amount or dryness by using the stored second model. The learning apparatus is only required to include at least the learning processing unit 450 of the present embodiment. The learning apparatus may be included in a computer such as a PC or an external apparatus such as a cloud.

In addition, various embodiments of the present invention may be described with reference to flowcharts and block diagrams, wherein the block may serve as (1) a stage in a process in which an operation is performed, or (2) a section of an apparatus having a role of performing an operation. Certain stages and sections may be implemented by dedicated circuit, programmable circuit supplied together with computer readable instructions stored on computer readable media, and/or processors supplied together with computer readable instructions stored on computer readable media. Dedicated circuit may include digital and/or analog hardware circuits, and may include integrated circuits (IC) and/or discrete circuits. The programmable circuit may include a reconfigurable hardware circuit including logical AND, logical OR, logical XOR, logical NAND, logical NOR, and other logical operations, a memory element or the like such as a flip-flop, a register, a field programmable gate array (FPGA) and a programmable logic array (PLA), or the like.

A computer readable medium may include any tangible device that can store instructions to be executed by a suitable device, and as a result, the computer readable medium having instructions stored thereon includes a product including instructions that can be executed in order to create means for executing operations specified in the flowcharts or block diagrams. Examples of the computer readable medium may include an electronic storage medium, a magnetic storage medium, an optical storage medium, an electromagnetic storage medium, a semiconductor storage medium, and the like. More specific examples of the computer readable medium may include a floppy (registered trademark) disk, a diskette, a hard disk, a random access memory (RAM), a read-only memory (ROM), an erasable programmable read-only memory (EPROM or flash memory), an electrically erasable programmable read-only memory (EEPROM), a static random access memory (SRAM), a compact disc read-only memory (CD-ROM), a digital versatile disk (DVD), a Blu-ray (registered trademark) disk, a memory stick, an integrated circuit card, or the like.

The computer readable instruction may include any of: an assembler instruction, an instruction-set-architecture (ISA) instruction; a machine instruction; a machine dependent instruction; a microcode; a firmware instruction; state-setting data; or either a source code or an object code described in any combination of one or more programming languages, including an object oriented programming language such as Smalltalk (registered trademark), JAVA (registered trademark), C++, or the like, and a conventional procedural programming language such as a "C" programming language or a similar programming language.

Computer readable instructions may be provided to a processor of a general purpose computer, special purpose computer, or other programmable processing apparatuses, or to programmable circuit, locally or via a local area network (LAN), wide area network (WAN) such as the Internet, or the like, to execute the computer readable instructions to create means for performing operations specified in the flowcharts or block diagrams. Examples of the processor include a computer processor, a processing unit, a microprocessor, a digital signal processor, a controller, a microcontroller, and the like.

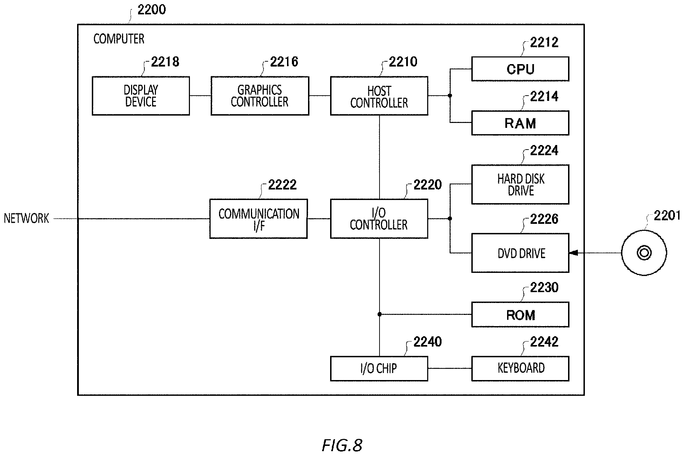

Fig. 8 illustrates an example of a computer 2200 in which a plurality of aspects of the present invention may be embodied wholly or or in part. wholly or partly embodied. A program installed in the computer 2200 can cause the computer 2200 to function as an operation associated with the apparatuses according to the embodiments of the present invention or as one or more sections of the apparatuses, or can cause the operation or the one or more sections to be executed, and/or can cause the computer 2200 to execute a process according to the embodiments of the present invention or a step of the process. Such programs may be executed by a CPU 2212 to cause the computer 2200 to perform specific operations associated with some or all of the blocks in the flowcharts and block diagrams described in the present specification.

The computer 2200 according to the present embodiment includes the CPU 2212, an RAM 2214, a graphics controller 2216, and a display device 2218, which are interconnected by a host controller 2210. The computer 2200 also includes input/output units such as a communication interface 2222, a hard disk drive 2224, a DVD-ROM drive 2226, and an IC card drive, which are connected to the host controller 2210 via an input/output controller 2220. The computer also includes legacy input/output units such as an ROM 2230 and a keyboard 2242, which are connected to the input/output controller 2220 via an input/output chip 2240.

The CPU 2212 operates according to programs stored in the ROM 2230 and the RAM 2214, thereby controlling each unit. The graphics controller 2216 acquires image data generated by the CPU 2212 in a frame buffer or the like provided in the RAM 2214 or in itself, such that the image data is displayed on the display device 2218.

The communication interface 2222 communicates with other electronic devices via a network. The hard disk drive 2224 stores programs and data used by the CPU 2212 in the computer 2200. The DVD-ROM drive 2226 reads a program or data from a DVD-ROM 2201 and provides the program or data to the hard disk drive 2224 via the RAM 2214. The IC card drive reads the programs and the data from the IC card, and/or writes the programs and the data to the IC card.

The ROM 2230 stores therein boot programs and the like executed by the computer 2200 at the time of activation, and/or programs that depend on the hardware of the computer 2200. The input/output chip 2240 may also connect various input/output units to the input/output controller 2220 via a parallel port, a serial port, a keyboard port, a mouse port, or the like.

Programs are provided by a computer readable medium such as the DVD-ROM 2201 or the IC card. The programs are read from the computer readable medium, are installed in the hard disk drive 2224, the RAM 2214, or the ROM 2230 which is also an example of the computer readable medium, and are executed by the CPU 2212. The information processing described in these programs is read by the computer 2200, and provides cooperation between the programs and the various types of hardware resources. The apparatus or method may be configured by implementing operations or processings of information according to use of the computer 2200.

For example, in a case where communication is performed between the computer 2200 and an external device, the CPU 2212 may execute a communication program loaded in the RAM 2214 and instruct the communication interface 2222 to perform communication processing based on a processing written in the communication program. Under the control of the CPU 2212, the communication interface 2222 reads transmission data stored in a transmission buffer processing area provided in a recording medium such as the RAM 2214, the hard disk drive 2224, the DVD-ROM 2201, or the IC card, transmits the read transmission data to the network, or writes reception data received from the network in a reception buffer processing area or the like provided on the recording medium.

In addition, the CPU 2212 may cause the RAM 2214 to read all or a necessary part of a file or database stored in an external recording medium such as the hard disk drive 2224, the DVD-ROM drive 2226 (DVD-ROM 2201), the IC card, or the like, and may execute various types of processing on data on the RAM 2214. Then, the CPU 2212 writes the processed data back in the external recording medium.

Various types of information such as various types of programs, data, tables, and databases may be stored in a recording medium and subjected to information processing. The CPU 2212 may execute, on the data read from the RAM 2214, various types of processing including various types of operations, information processing, conditional judgement, conditional branching, unconditional branching, information retrieval/replacement, or the like described throughout the present disclosure and specified by instruction sequences of the programs, and writes the results back to the RAM 2214. In addition, the CPU 2212 may retrieve information in a file, a database, or the like in the recording medium. For example, when a plurality of entries, each having an attribute value of a first attribute associated with an attribute value of a second attribute, is stored in the recording medium, the CPU 2212 may retrieve, out of the plurality of entries, an entry with the attribute value of the first attribute specified that meets a condition, read the attribute value of the second attribute stored in said entry, and thereby acquiring the attribute value of the second attribute associated with the first attribute meeting a predetermined condition.

The programs or software modules described above may be stored in a computer readable medium on or near the computer 2200. In addition, a recording medium such as a hard disk or an RAM provided in a server system connected to a dedicated communication network or the Internet can be used as a computer readable medium, thereby providing a program to the computer 2200 via the network.

While the present invention has been described with the embodiments, the technical scope of the present invention is not limited to the above-described embodiments. It is apparent to persons skilled in the art that various alterations and improvements can be added to the above-described embodiments. It is also apparent from description of the claims that the embodiments to which such alterations or improvements are made can be included in the technical scope of the present invention.

It should be noted that the operations, procedures, steps, stages, and the like of each process performed by an apparatus, system, program, and method shown in the claims, the specification, or the drawings can be realized in any order as long as the order is not indicated by "prior to," "before," or the like and as long as the output from a previous process is not used in a later process. Even if the operation flow is described using phrases such as "first" or "next" for the sake of convenience in the claims, specification, or drawings, it does not mean that the process must be performed in this order.

### EXPLANATION OF REFERENCES

10: system,
20: measurement apparatus,
30: external apparatus,
40: pipe,
100: vortex flow meter,
110: vortex generator,
120: detection unit,
130: charge converter,
140: AD converter,
150: frequency analysis unit,
160: pulse conversion unit,
170: communication unit,
200: sensor,
300: computing apparatus,
310: pulse counting unit,
320: computing unit,
400: estimation apparatus,
410: acquisition unit,
420: state determination estimation unit,
430: selection unit,
440: fluid quality estimation unit,
450: learning processing unit,
460: output unit,
2200: computer,
2201: DVD-ROM,
2210: host controller,
2212: CPU,
2214: RAM,
2216: graphics controller,
2218: display device,
2220: input/output controller,
2222: communication interface,
2224: hard disk drive,
2226: DVD-ROM drive,
2230: ROM,
2240: input/output chip,
2242: keyboard.

## Claims

1. An estimation apparatus comprising:
an acquisition unit that acquires state data including intensity data of at least one frequency band related to a detection signal detected by a vortex flow meter for a fluid;
a state determination estimation unit that estimates a state of the fluid based on the state data acquired by the acquisition unit;
a fluid quality estimation unit that estimates, from the intensity data, at least either of a liquid amount or dryness related to the fluid according to the state of the fluid estimated by the state determination estimation unit; and
an output unit that outputs at least either of the liquid amount or the dryness estimated by the fluid quality estimation unit.

2. The estimation apparatus according to claim 1, wherein
the acquisition unit acquires a digital signal representing the intensity data of at least one frequency band from the vortex flow meter.

3. The estimation apparatus according to claim 1 or 2, wherein
the acquisition unit acquires the state data including at least one of a flow speed, a temperature, a pressure, a viscosity, concentration, or density measured for the fluid, and
the fluid quality estimation unit estimates, from the intensity data acquired by the acquisition unit, and the state data including at least one of the flow speed, the temperature, the pressure, the viscosity, the concentration, or the density measured for the fluid, at least either of the liquid amount or dryness related to the fluid, according to a state of the fluid estimated by the state determination estimation unit.

4. The estimation apparatus according to claim 3, wherein
the vortex flow meter outputs, to a computing apparatus, a pulse signal representing a vortex frequency of the detection signal generated based on the intensity data of at least one frequency band, and
the acquisition unit acquires the state data including at least one of the pressure, the flow speed, a volumetric flow rate, the density, or a mass flow rate of the fluid calculated based on the pulse signal by the computing apparatus.

5. The estimation apparatus according to any one of claims 1 to 4, wherein
the acquisition unit acquires the state data including intensity data of a plurality of frequency bands related to a detection signal of the fluid detected by the vortex flow meter, and
the fluid quality estimation unit estimates at least either of the liquid amount or dryness related to the fluid from the intensity data of the plurality of frequency bands.

6. The estimation apparatus according to claim 5, wherein
the fluid quality estimation unit estimates, from a maximum value among the intensity data of the plurality of frequency bands or a combined value of intensity data of the plurality of frequency bands, at least either of the liquid amount or dryness related to the fluid.

7. The estimation apparatus according to any one of claims 1 to 6, wherein
the acquisition unit acquires the intensity data that is normalized, and
the fluid quality estimation unit estimates, from the intensity data that is normalized, at least either of the liquid amount or dryness related to the fluid;
the estimation apparatus further comprises a selection unit that selects, from a plurality of computations, a computation corresponding to the state of the fluid estimated by the state determination estimation unit, and
the fluid quality estimation unit estimates, from the intensity data acquired by acquisition unit, at least either of the liquid amount or dryness related to the fluid through the computation selected by the selection unit;
the state determination estimation unit estimates, based on the state data acquired by acquisition unit, which of a stratified flow, a stratified wavy flow, or a annular mist flow the state of the fluid is; or
the state determination estimation unit estimates, based on the state data acquired by the acquisition unit, the state of the fluid by using a first model for estimating the state of the fluid from the state data.

8. The estimation apparatus according to claim 7, wherein the state determination estimation unit:
determines whether the state of the fluid is wet vapor based on the state data acquired by the acquisition unit; and
estimates which of a stratified flow, a stratified wavy flow, or an annular mist flow the state of the fluid is based on the state data acquired by the acquisition unit, when the state of the fluid is determined to be wet vapor.

9. The estimation apparatus according to claim 7, wherein
the selection unit selects, from a plurality of second models for estimating, from intensity data of at least one frequency band related to a detection signal of the fluid, at least either of a liquid amount or dryness related to the fluid, a second model corresponding to the state of the fluid estimated by the state determination estimation unit according to the state of the fluid, and
the fluid quality estimation unit estimates, from the intensity data, at least either of the liquid amount or dryness related to the fluid by using the second model selected by the selection unit.

10. The estimation apparatus according to claim 9, further comprising:
a learning processing unit that generates the second model for each state of the fluid.

11. A learning apparatus comprising;
a learning processing unit that generates, from intensity data of at least one frequency band related to a detection signal detected by a vortex flow meter for a fluid, a second model for estimating at least either of a liquid amount or dryness related to the fluid for each state of the fluid.

12. A method comprising:
acquiring, by a computer, state data including intensity data of at least one frequency band related to a detection signal detected by a vortex flow meter for a fluid;
estimating, by the computer, a state of the fluid based on the state data acquired;
estimating, by the computer from the intensity data, at least either of a liquid amount or dryness related to the fluid according to the state of the fluid estimated; and
outputting, by the computer, at least either of the liquid amount or the dryness estimated.

13. A learning method comprising:
generating, by a computer from intensity data of at least one frequency band related to a detection signal detected by a vortex flow meter for a fluid, a second model for estimating at least either of a liquid amount or dryness related to the fluid for each state of the fluid.

14. A program that causes a computer to function as:
an acquisition unit that acquires state data including intensity data of at least one frequency band related to a detection signal detected by a vortex flow meter for a fluid;
a state determination estimation unit that estimates a state of the fluid based on the state data acquired by the acquisition unit;
a fluid quality estimation unit that estimates, from the intensity data, at least either of a liquid amount or dryness related to the fluid according to the state of the fluid estimated by the state determination estimation unit; and
an output unit that outputs at least either of the liquid amount or the dryness estimated by the fluid quality estimation unit.

15. A learning program that causes a computer to function as:
a learning processing unit that generates, from intensity data of at least one frequency band related to a detection signal detected by a vortex flow meter for a fluid, a second model for estimating at least either of a liquid amount or dryness related to the fluid for each state of the fluid.
